# EUROPEAN PATENT APPLICATION

(11) **EP 2 395 463 A1**
(43) Date of publication of application: **14.12.2011**
(21) Application number: 11305728.5
(22) Date of filing: 10.06.2011
(51) Int. Cl.: G06Q 10/00

(54) **Dynamic event resolution system and method of operation thereof**

(30) Priority: 11.06.2010 US 354183 P
(71) Applicant: France Telecom, 75015 Paris (FR)
(72) Inventor: Lau Wilson, San Francisco, CA 94080 (US); Lee Dominic, Sunnyvale CA 94086 (US)

(57) **Abstract**

A communication method to communicate with one or more users of a plurality of users in an enterprise system. The communication method may be controlled by one or more controllers and may determine whether an issue has occurred in the enterprise system, determine a context of the issue, an/or determine a ranking score of each of the one or more users based upon a relation of each of the one or more users to the context of the issue. The communication method may also select one or more users from the plurality of users in accordance with the ranking score of each user, and/or establish communication via a communication channel with one or more of the selected users.

## Description

### FIELD OF THE PRESENT SYSTEM:

The present system relates to at least one of a system, method, device, computer program, user interface, and apparatus for providing a dynamic event resolution system and, more particularly, to a dynamic and predictive event resolution system for resolving issues associated with an event.

### BACKGROUND OF THE PRESENT SYSTEM:

Typically, in an enterprise environment such as a business environment, issues occur and may require immediate attention to resolve. This process is known as issue resolution. Unfortunately, issue resolution typically requires human intervention to select one or more persons most suitable to resolve the issue. Thus, in a typical scenario, if an issue requires immediate attention to resolve, a professional, such as a manager, a system administrator, etc., may have to identify an issue and thereafter select certain persons who are believed to have experience necessary to resolve the issue such that the issue may be resolved in a timely fashion. Unfortunately, however, it is difficult to identify issues and professionals who can resolve these issues in a large enterprise. Accordingly, there is a need for a system, method, device, computer program, user interface, and apparatus to overcome the disadvantages of the prior art.

### SUMMARY OF THE PRESENT SYSTEM:

It is an object of the present system to overcome disadvantages and/or make improvements in the prior art.

In accordance with an aspect of the present system, there is disclosed a communication method to communicate with one or more users of a plurality of users in an enterprise system. The communication method may be controlled by one or more controllers and may determine whether an issue has occurred in the enterprise system, determine a context of the issue, and/or determine a ranking score of each of the one or more users based upon a relation of each of the one or more users to each other and/or the context of the issue. The communication method may also select one or more users from the plurality of users in accordance with the ranking score of each user. Moreover, the present system may establish collaborative communication with the selected one or more users of the plurality of users using one or more communication channels.

The method may further include acts of indexing information in the enterprise system in accordance with a semantic protocol and/or forming a query in accordance with the context of the issue. The method may further include an act of querying indexed information in accordance with the query so as to obtain a corresponding query result set. Further, the act of selecting one or more users from the plurality of users in accordance with the ranking score of each user may include an act of determining whether the ranking score of a corresponding user of the plurality of users is greater than or equal to a threshold value. The method may further include an act of determining whether one or more of the selected users of the plurality of users is available based upon one or more of presence and location information.

According to another aspect of the present system there is disclosed a communication system to communicate with one or more users of a plurality of users in an enterprise system, the communication system may include one or more controllers which may determine whether an issue has occurred in the enterprise system; determine a context of the issue; determine a ranking score of each of the one or more users based upon a relation of each of the one or more users to the context of the issue; select one or more users from the plurality of users in accordance with the ranking score of each user of the plurality of users; and/or establish communication via a communication channel with one or more of the selected users of the plurality of users. According to the system, the controller may index information in the enterprise system in accordance with a semantic protocol. Further, the controller may form a query in accordance with the context of the issue. Further, the controller may query indexed information in accordance with the query so as to obtain a corresponding query result set.

Further, the controller may perform the selection in accordance with a determination of whether the ranking score of a corresponding user of the plurality of users is greater than or equal to the threshold value. Thus, for example, if the ranking score of a corresponding user of the plurality of users is greater than or equal to the threshold value, the controller may select the corresponding user of the plurality of users. However, if the controller determines that the ranking score of a corresponding user of the plurality of users is less than the threshold value, the controller may set a flag indicating that the corresponding user of the plurality of users is not a selected user. Further, the controller may determine whether one or more of the selected users of the plurality of users is available based upon one or more of presence and location information. The controller may include one or more controllers which may be located locally and/or remotely from each other.

According to yet another aspect of the present system, there is disclosed a computer program stored on a computer readable memory medium, the computer program configured to communicate with one or more users of a plurality of users in an enterprise system, the computer program may include a program portion configured to: determine whether an issue has occurred in the enterprise system; determine a context of the issue; determine a ranking score of each of the one or more users based upon a relation of each of the one or more users to the context of the issue; select one or more users from the plurality of users in accordance with the ranking score of each user; and/or establish communication via a communication channel with one or more of the selected users.

Further, the computer program portion may be configured to index information in the enterprise system in accordance with a semantic protocol. Further, the computer program may be configured to form a query in accordance with the context of the issue. Further, the computer program portion may be configured to query indexed information in accordance with the query so as to obtain a corresponding query result set. Moreover, the program portion may be configured to perform the selecting in accordance with a determination of whether the ranking score of a corresponding user of the plurality of users is greater than or equal to the threshold value. It is further envisioned that the computer program portion may be configured to determine whether one or more of the selected users of the plurality of users is available based upon one or more of presence and location information.

### BRIEF DESCRIPTION OF THE DRAWINGS:

The invention is explained in further detail, and by way of example, with reference to the accompanying drawings wherein:
FIG. 1 shows a block diagram of a communication system in accordance with embodiments of the present system;
FIG. 2 shows a flow diagram that illustrates a process in accordance with embodiments of the present system;
FIG. 3 shows a flow diagram that illustrates a process in accordance with embodiments of the present system; and
FIG. 4 shows a portion of a system (e.g., peer, server, etc.) in accordance with embodiments of the present system.

### DETAILED DESCRIPTION OF THE PRESENT SYSTEM:

The following are descriptions of illustrative embodiments that when taken in conjunction with the following drawings will demonstrate the above noted features and advantages, as well as further ones. In the following description, for purposes of explanation rather than limitation, illustrative details are set forth such as architecture, interfaces, techniques, element attributes, etc. However, it will be apparent to those of ordinary skill in the art that other embodiments that depart from these details would still be understood to be within the scope of the appended claims. Moreover, for the purpose of clarity, detailed descriptions of well known devices, circuits, tools, techniques and methods are omitted so as not to obscure the description of the present system. It should be expressly understood that the drawings are included for illustrative purposes and do not represent the scope of the present system. In the accompanying drawings, like reference numbers in different drawings may designate similar elements.

For purposes of simplifying a description of the present system, the terms "operatively coupled", "coupled" and formatives thereof as utilized herein refer to a connection between devices and/or portions thereof that enables operation in accordance with the present system. For example, an operative coupling may include one or more of a wired connection and/or a wireless connection between two or more devices that enables a one and/or two-way communication path between the devices and/or portions thereof.

The term rendering and formatives thereof as utilized herein refer to providing content, such as digital media which may include, for example, a contact list, contact information, notifications, voice mails, emails, short message service (SMS) messages, calling information, call control or call management information, audio information, visual information, audiovisual information, etc., such that it may be perceived by at least one user sense, such as a sense of sight and/or a sense of hearing. For example, the present system may render a user interface (UI) on a display device so that it may be seen and interacted with by a user. Further, the present system may render audio visual content on both of a device that renders audible output (e.g., a speaker, such as a loudspeaker) and a device that renders visual output (e.g., a display). To simplify the following discussion, the term content and formatives thereof will be utilized and should be understood to include audio content, visual content, audio visual content, textual content and/or other content types, unless a particular content type is specifically intended, as may be readily appreciated.

The user interaction with and manipulation of the computer environment may be achieved using any of a variety of types of human-processor interface devices that are operationally coupled to a processor (e.g., a controller) or processors controlling the displayed environment. A common interface device for a user interface (UI), such as a graphical user interface (GUI) is a mouse, trackball, keyboard, touch-sensitive display, a pointing device (e.g., a pen), etc. For example, a mouse may be moved by a user in a planar workspace to move a visual object, such as a cursor, depicted on a two-dimensional display surface in a direct mapping between the position of the user manipulation and the depicted position of the cursor. This is typically known as position control, where the motion of the depicted object directly correlates to motion of the user manipulation.

An example of such a GUI in accordance with embodiments of the present system is a GUI that may be provided by a computer program that may be invoked by the system or user, such as to enable a user to communicate with one or more other users.

The present system may include one or more enterprise environments which may be part of one or more enterprise systems (ESs) each of which may include one or more networks including communication devices such as, for example, telephones, computers, sensors, memories, nodes, etc., operatively coupled to each other so as to enable communication to and/or from each communication device. Accordingly, the networks may include any suitable network or networks such as, for example, a local area network (LAN), a wide area network (WAN), the Internet, an intranet, an ad-hoc network, a (public switched telephone network) PSTN, a cellular network, etc.

Typically, in the enterprise environment, business activities and operations may involve one or more related persons (e.g., users), communication devices (e.g., computers, sensors, telephones, mobile communication devices, mobile stations (MSs), nodes, etc.) which may be located inside or outside of the enterprise environment and may communicate with one or more persons and/or communication devices within, for example, a corresponding enterprise environment. For the sake of clarity, it will be assumed that the one or more related persons and/or communication devices are located within the enterprise environment and, thus, may be considered to be included within, one or more corresponding enterprise systems.

Within the enterprise environment, a typical activity such as a business activity, may include an issue which may be associated with an event. For example, an issue may require immediate attention (e.g., by one or more users) to resolve. Accordingly, the present system may select one or more users who may be relevant under a context of the issue and may inform these users of the issue. For example, in accordance with embodiments of the present system wherein an issue is related to an undeliverable email (event), an email server may receive an email sent to a recipient that is not valid (e.g., no longer valid). In these embodiments, the email server may respond by identifying the context of the event. The context of the event may be extracted from unstructured information (e.g., email body/attachment, etc.) using, for example, a natural language processing technique as well as (or in place of) extracted from unstructured data (e.g., recipient email, the department unit of the recipient, etc.).

In accordance with embodiments of present system, a Monthly Finance report may have an event such as an imbalance amount of one engineering department, project X, activity, etc. In these embodiments, the context may be extracted from the type of event, in this case, Finance, Engineering department, Project X. The context may include those people/employees who are involved in the workgroup/department related to this event. In a case of an event such as a power outage of a server, the context may be determined to include IT/MIS department responsible for the server, people/group who work on this server, project managers or stakeholders (e.g., in a case wherein the server belongs to a project).

Further, the system may provide an API such as, for example, a notification API (NAPI) may notify one or more of the selected users and/or to enable communication (e.g., interaction, etc.) between the one or more of the selected users so as to attempt to address and thus, resolve the issue. NAPIs may include proprietary and/or third party communication applications such as, for example, conference call applications, click-to-call applications, webinar applications, real-time communication applications, instant messaging applications, (e.g., SMS, MMS, IMS, etc.), mail applications (e.g., Microsoft Outlook™, etc.), social networking applications (e.g., Twitter™ , Facebook™, Google™ Wave™, etc.), etc. Further, the system may be configured to use a desired communication application of a plurality of communication applications based upon a context of the issue, a number of selected users, etc.

As used herein, the term issue may refer to an issue or an event (both of which will hereinafter be referred to as an issue for the sake of clarity) which may be generated and/or detected by the system and may be dependent upon a type (e.g., a business type) of the enterprise environment (e.g., a telecommunication business, a retail store, a governmental agency, a university, etc.) and may, for example, a security issue, a warning, an error, a requirement, an appointment, an alarm event or time, an operation, action or event (e.g., corresponding with an email, a calendar, etc.), and/or other types of issues or events corresponding with a type and/or configuration of an enterprise environment. Issues may be local to a device or user (e.g., calendar alarm, etc.) or may be system wide (e.g., it may affect multiple devices and/or users such as, for example, an email server failure, etc.). Thus, an issue may refer to any type of circumstance in an enterprise system which may require attention by one or more users to resolve.

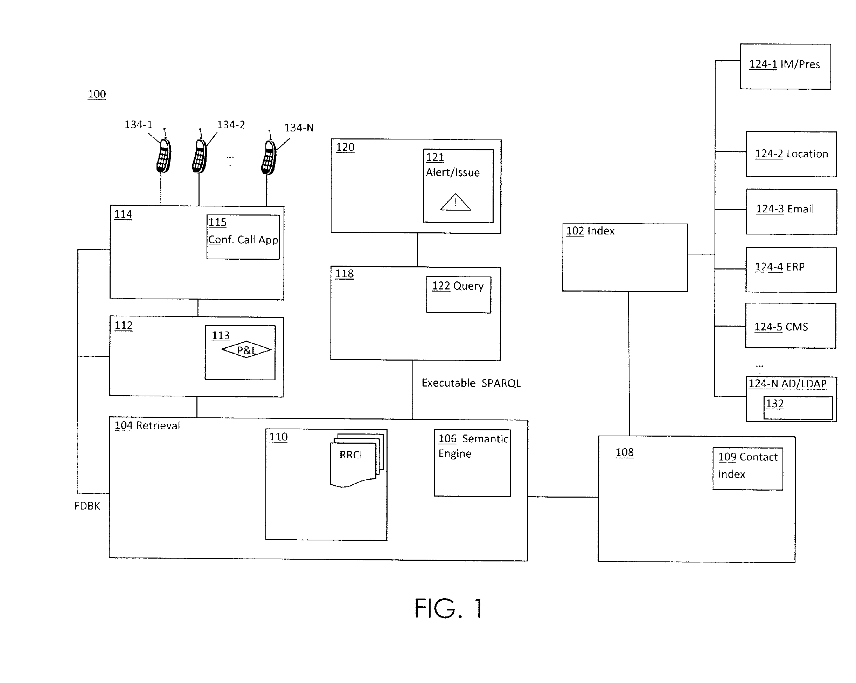

FIG. 1 shows a block diagram of a communication system 100 in accordance with embodiments of the present system. The communication system 100 may include one or more of an index portion 102, a retrieval portion 104, a contact index portion 108, a contact selection portion 112, a conference portion 114, a monitor portion 120, a query portion 118, operating portions 124-x, and one or more user stations (USs) 134-x.

The communication system 100 may include any suitable system or systems such as, for example, an enterprise network of a company (large or small), educational institution, organization, etc. Accordingly, the communication system 100 may include for example, one or more networks, computers, nodes, sensors, communication devices, memories, etc., which may communicate with each other and/or which may be locally or remotely situated from each other.

The USs 134-1 thorough 134-N may include any suitable communication device with which a user may communicate with other user's and/or the system 100 using a wired and/or wireless communication methods. Accordingly, USs 134-x may include devices such as, for example, telephony devices (e.g., mobile stations (MSs), cellular phones, softphones (e.g., Internet Protocol (IP) Phones), conventional phones, etc.), personal digital assistances (PDAs) such as, for example, PALM™, RIM™, IPad™, and other similar types of devices, personal computers (PCs), notebooks, netbooks, computing pads, and/or other types of communication devices. Each of the USs 134-x may have one or more contact methods. For example, a PDA-type US may be contacted via a telephone number and/or an email, SMS addresses, and/or IP address. One or more of these addresses may be associated with a user. Thus, the system may contact a desired user via a desired contact address of one or more contact addresses for each user. Accordingly, if the system desires to contact the user during work hours, it may contact the user via a work telephone number of the user. However, if the system desires to contact the user after work hours, the system may contact the user via an email or SMS address of the user.

The operating portions 124-x may include one or more applications or systems such as, for example, an Internet Messenger (IM)/Presence portion 124-1, a location portion 124-2, an email portion 124-3, an enterprise resource planning (ERP) portion 124-4, a content management system (CMS) portion 124-5 (e.g., SharePoint workspace) and/or an active directory/lightweight directory access protocol (AD/LDAP) portion 124-N, which may communicate with each other. Depending upon a type of enterprise system included in the communication system 100, it is also envisioned that other types of operating portions may be included or removed. However, for the sake of clarity, only operating portions 124-1 through 124-N will be discussed. Moreover, one or more of the operating portions 124-x may be located locally or remotely from the communication system 100 and may store information (e.g., historical information and/or currently information) related to a user's operation of the corresponding portion in a corresponding memory which may be local and/or remote from the corresponding operating portion 124-x. Further, one or more of the operating portions 124-x may transmit information related to a user's current use (i.e., real-time use) of the corresponding operation portion 124-x.

With regard to the IM/Presence portion 124-1, this portion may include an IM/Presence application which may provide messaging features to the enterprise system. Thus, for example, the IM/Presence portion 124-1 may provide messaging features to one or more users (e.g., contacts) of the system 100. Further, the IM/Presence application 124-1 may perform functions such as, for example, detect the presence of a user at a certain location (e.g., physical and/or logical) and store and/or transmit this information to a desired device (e.g., the index portion 102, an operating portion 124-x, etc.) or address (e.g., IP address, etc.). Further, the IM/Presence application 124-1 may store and/or transmit information relating to a user's activities (e.g., a user's messages) to a corresponding memory for later use.

With regard to the location portion 124-2, this portion may determine information related to a location (e.g., physical and/or logical) of one or more users of the system 100 and may transmit and/or store this information in a memory for later use. Accordingly, the location portion 124-2 may determine and/or store location (e.g., in a location memory) information (e.g., physical and/or logical) for one or more users of the system 100. Further, the location portion 124-2 may report real-time location information for one or more users.

With regard to the email portion 124-3, this portion may include one or more email applications which may provide email functions to the system 100. Accordingly, the email portion 124-3 may provide email applications, email storage, contact lists, etc. to one or more users of the system 100. Further, the email portion 124-3 may perform functions such as, for example, storing (e.g., in a memory) and/or transmitting email information related to one or more users of the system 100. The email portion 124-3 may operate with local (e.g., Outlook™) and/or web-based (e.g., Gmail™, etc.) email systems.

With regard to the content management system (CMS) portion 124-5, this portion may include one or more applications which may provide a content management system to provide additional indexable information for the communication system 100. For example, a content management system such as Microsoft Sharepoint, contains information about which document belongs to which project, and which person is author of which document. This portion may operate in accordance with any suitable protocol such as, for example, CMS, RDF, etc., The CMS portion 124-5 may store information which may correspond with the information shown in Table 2 and discussed below.

With regard to the ERP portion 124-4, this portion may include one or more applications which may provide enterprise resource planning functions to manage internal and/or external resources of the system 100 and/or may transmit and/or store information related to the operation thereof. For example, the ERP portion 124-4 may contain production scheduling information and product-part relationship information (e.g., which sub-component manufactured by which factory goes into which product). When the company has an alert/issue (event) such as product recall, the present system may automatically gather context such as the right employees from the right factory to discuss the issue.

With regard to the AD/LDAP portion 124-N, this portion may include one or more applications that provide one or more of an active directory including for example, group information, etc., for the communication system 100. This section may operate in accordance with any suitable protocol such as, for example, AD/LDAP, SPARQL, etc., protocols and/or other related protocol for an enterprise or social directory. In accordance with embodiments of the present system, the group information may be used to query and/or modify data using directory services of the communication system 100. The AD/LDAP portion 124-N may store user and/or system information corresponding with information such as, for example, shown in Table 1 and discussed below.

Each of the operating portions 124-x may include a server to receive queries such as, for example, RDF queries and/or return corresponding results.

The monitor portion 120 may monitor the communication system 100 to detect the occurrence of one or more issues such as, for example, an error (e.g., a physical system error such as a hard-disc failure, etc.), an alarm (e.g., an alarm generated by a calendar application (e.g., 2:00 pm meeting, etc.), etc.), reception of a message such as, for example, an email, an SMS message, a network failure, etc., a security issue (e.g., a power failure, an intruder, etc.), a requirement (e.g., system memory must be increased, etc.), a warning (e.g., temperature increasing, etc.) and generate an alert/issue message 121 in response to the detected issue. The generated alert/issue message 121 may include information relating to the occurrence of the one or more issues and/or may be transmitted to the query portion 118.

The query portion 118 upon receiving the generated alert/issue message 121, may process the alert/issue message 121 and may generate a corresponding alert query (AQ) 122 such as, for example, is shown in Tables 4 and 5 below, which may include information relevant to select one or more relevant users of the system 100 (e.g., contacts) who may be contacted by the system to resolve the associated one or more events corresponding with the alert/issue message 121. The AQ 122 may correspond with any suitable format such as, for example, an executable SPARQL format. The communication system 100 may select different contacts (e.g., a different group of contacts) for each of the one or more events. For example, if the event corresponds with an email error, then the system may determine to select one or more corresponding contacts (e.g., an email administrator, etc.). In another example of the present system, in a case wherein an event corresponds to an email received from a vendor trying to deliver an invoice to a responsible person in the Account Payable department, the system 100 may determine the right person in the Account Payable department so that the vendor's email may be forwarded to the right person. Similarly, if the event corresponds with an action item for an API of communication system 100, the communication system 100 may determine to select one or more contacts who are members of a design group (e.g., managers, designers, technicians, etc.) which is assigned to a group which is designing the API of the communication system 100. Accordingly, the query system may use information such as, for example, employee (e.g., contact) name information and corresponding assigned group information to form the AQ 122. Thus, the context of a user to an issue may determine whether a user may be selected to be a contact for the issue.

The index portion 102 may include an aggregator which may aggregate information obtained using a crawler (e.g., an internal crawler, a web crawler, etc.) which may crawl for desired information from any suitable source (e.g., within the system 100 and/or external of the system 100). As utilized herein, the term crawler and formatives thereof are programs that automatically traverse a given data structure to extract information from the data structure.

For example, the crawler may crawl selected operating portions 124-x such as, for example, the email portion 124-3 for information related to one or more users, groups, projects, subjects, etc. Similarly, the crawler may crawl the AD/LDAP portion 124-N to obtain information related to one or more users, projects, etc. Moreover, the index portion 102 may obtain information (e.g., employee name, etc.) from one or more operating portions 124-x and then may use the information obtained for indexing information in another portion (e.g., email related to the employee) such as, for example, the email portion 124-2. The index portion 102 may index and/or correlate information corresponding to one or more users of the present communication system 100 and/or relationships between the one or more users in accordance with one or more semantic techniques such as, for example, a research description framework (RDF) and may store this information as RDF information in a suitable format (e.g., a knowledge representation language such as Rule Interchange Format (RIF), Semantic Web Rule Language (SWRL), etc.) in a memory of the system. The index portion 102 may operate at predetermined times such as, for example, in a periodic, or semi-periodic manner or when called by other application. The index portion 102 may transmit information that it generates (e.g., the RDF information, etc.) to the contact index portion 108 for storage. The index portion 102 may operate in accordance with one or more algorithms such as, for example, prediction algorithms, etc. so that index portion 102 may analyze information stored in one or more memories of the system 100 such as, for example, the operating portions 124-x to obtain desired information (e.g., AD/LDAP information, email information, IM information, location information, mobility information, ERP information, CRM information, etc.) and semantically index this information for later use. Thus, all (or selected) information within an enterprise such as, for example, the communication system 100 may be semantically indexed and may be stored (e.g., as RDF information) for later use which may enhance information retrieval efficiency when an issue is detected. However, it is also envisioned that the RDF information may be dynamically formed in real time in accordance with embodiments of the present system.

The contact index portion 108 may include one or more suitable memories such as, for example, a contact index memory 109 and may store information such as, for example, the RDF information received from the index portion 102.

The retrieval portion 104 may include a semantic engine 106 and may receive the AQ 122 from the query portion 118 and forward the AQ 122 to the semantic engine 106 which may query the RDF information in accordance with the AQ 122. Accordingly, results of this query (e.g., a query result set) may then be processed as will be discussed below and rankings for each selected contact in a context of the issue may be determined. These rankings may be based upon a ranking score which is discussed in further detail below. The retrieval portion may then use the ranking score to rank each selected contact and corresponding ranked relevant contact list (RRCL) information 110 may be formed or otherwise updated in accordance with the ranking score as will be discussed below. The RRCL 110 may include one or more tables, arrays, matrices, etc., which may include selected contact information and associated ranking score. Thus, a selected contact (e.g., John Smith) may have an associated ranking score having, for example, a numerical value, (e.g., 4, etc.) as will be discussed below. The ranking score may include a corresponding weight (e.g., zero, an integer, etc.) which may be set such that higher value may represent a greater relevance to the context of a corresponding issue. Accordingly, the weights may have a range of, for example, 0 to 10 (although other ranges or value(s) are also envisioned) where 0 may be indicate little or no relevance and 10 may indicate a high relevance.

The contact selection portion 112 may obtain the RRCL information 110 and filter it accordance with one or more selection criteria (SC) so as to select one or more selected relevant contacts (SRCs) with whom communication is desirable. For example, the SC may correspond with one or more of a general threshold ranking score; a location score; a presence score; an availability and privacy score (e.g., private after work hours and not available); an importance score (e.g., only person in enterprise with experience with issue or manager of department with issue therefore highly important); etc., each of which may be assigned a value (e.g., an integer such as, for example 1 through 10 indicative of a low to high score although other values and/or ranges are also envisioned). Further, each ranking score may have a weight assigned to it. Thus, for example, assuming that the availability and privacy score is set to a highest value (10), if a relevant contact is deemed to have left work (i.e., not at work), this contact will not be selected even if the relevant contact has high scores (e.g., 10) in all other scores. Further, the SC scores and/or the weights may be dynamically changed depending upon enterprise resources, time, etc. Moreover, as the SCs may correspond with an enterprise structure, it is envisioned that many other SC may be selected and/or set in accordance with requirements of a given enterprise in which the present system is configured. After selecting the one or more SRCs, the contact selection portion 112 may forward information corresponding with the SRCs (e.g., name, contact information, etc.) to the conference portion 114.

The conference portion 114 may include one or more NAPIs which may include, for example, contact applications (e.g., an auto conference call dialer (ACCD), etc.) which may attempt to contact the one or more SRSs and/or establish communication (e.g., using one or more communication channels) between one or more of the SRCs (e.g., using a conference call application, etc.). The ACCD may operate using, for example, an internet protocol (IP) telephony system or other suitable telephony system to trigger a conference call to dial one or more of the selected SRCs automatically. After contacting a corresponding SRC (e.g., using any suitable method), the ACCD may render a request that the SRC participates in a communication (e.g., a conference call, a video conference, etc., on a communication channel). Accordingly, if the ACCD determines that the corresponding SRC desires to participate in the communication, the SRC may establish a conference communication with this SRC and other SRCs which have also desired to participate on the communication channel. The ACCD may perform this operation for each SRC of the SRCs in a parallel and/or serial manner. Further, it is envisioned that the conference portion 114 may contact an SRC using data methods (e.g., email, SMS, etc.) rather than a voice method. Further, it is envisioned that the established communication may include an audio, video, and/or audiovisual content which may be transmitted using one or more communication channels. Further, it is envisioned that the established communication may be unicast, multicast, or broadcast to one or more of the SRCs.

Further, the conference portion 114 may generate feedback learning information which may return feedback (FDBK) information such as, for example, whether an SRC elected to participate in a communication channel, a channel type, etc., and transmit this information to the retrieval portion 104 which may then update the contact index memory 109 in accordance with the feedback learning information. Accordingly, the present system 100 may include a learning function which may learn, for example, from the FDBK information.

Accordingly, the present system may determine whether an issue has occurred, seek needed information that may match the issue when it is determined that the issue has occurred, and/or enable a conference communication to resolve the issue in an expedient and timely manner.

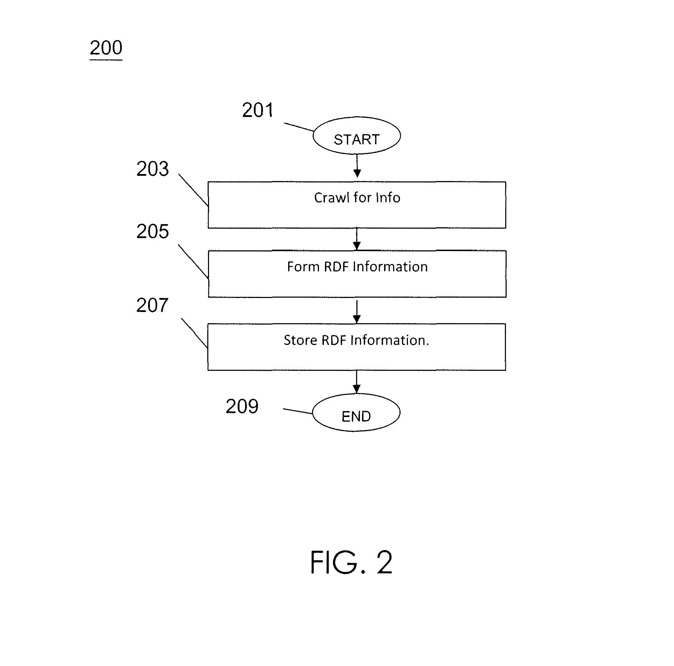

A process illustrating one or more operations performed by, for example, an index portion (and/or other portions) of the present system is illustrated below with reference to FIG. 2 which shows a flow diagram that illustrates a process 200 in accordance with embodiments of the present system. The process 200 may be performed using one or more computers communicating over a network. The process 200 may include one of more of the following acts. Further, one or more of these acts may be combined and/or separated into sub-acts, if desired. In operation, the process may start during act 201 and then proceed to act 203.

During act 203, the process may crawl information from various portions (e.g., operating portions 124-x, etc.) and/or memories of the present system and form corresponding RDF information that may be stored in, for example, a context index memory (e.g., see, context index memory 109). For example, an indexer, may crawl an AD/LDAP memory of the present system for various information using a query method and receive a query response such as, for example, is shown in Table 1 below. In a similar manner, the indexer, may crawl a CMS memory of the present system for various information using a query method and receive a query response such as, for example, is shown in Table 2 below. After completing act 203, the process may continue to act 205. With reference to Tables 1 and 2, although a single query is shown for a single contact, the process may include multiple contacts in a single query. Further, it is envisioned that the process may form a query for each contact.

**Table 1**

| **From AD/LDAP (user John Smith)** |
|---|
| |
| dn: uid=jsmith, ou=IT, dc=example, dc=com |
| objectclass: MISPerson |
| uid: jsmith |
| sn: Smith |
| cn: John Smith |
| title: IT Admin |
| manager: Peter Smith |
| department: MIS |
| telephonenumber: 510-111-1234 |
| roomnumber: 122G |
| o: Example, Inc. |
| mailRoutmgAddress: jsmith@example.com |
| mailhost: mail. example.com |
| uidnumber: 1234 |
| gidnumber: 1200 |

**Table 2**

| **From Content Management System (CMS) (i.e., sharepoint workspace)** |
|---|
| 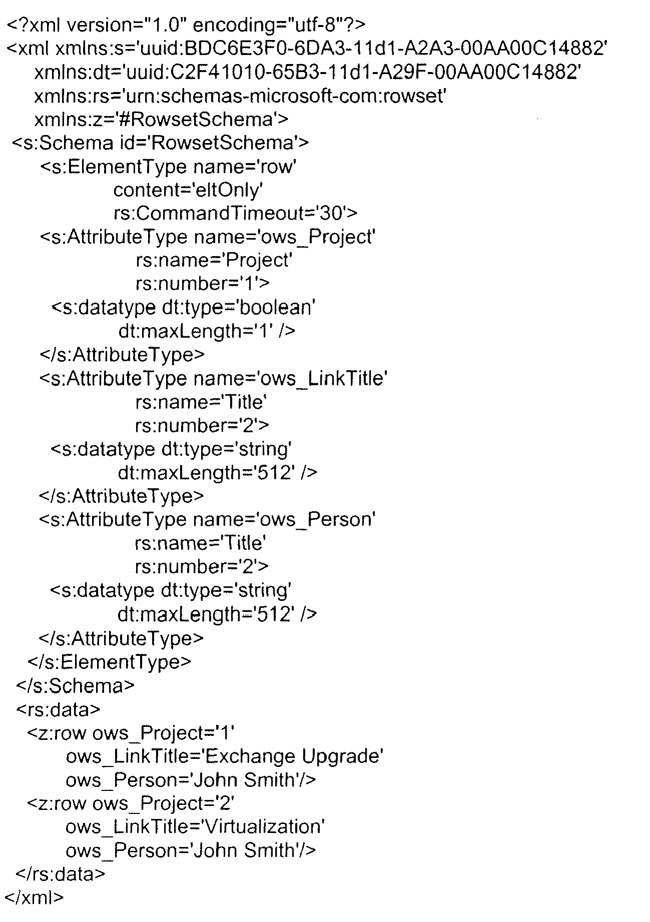 |

During act 205, the indexer may form RDF information which corresponds with the received query results. The RDF information may have a suitable format such as, for example, an RDF format as shown in Table 3 below which illustrates RDF information for John Smith. Thus, each contact may have corresponding RDF information. Accordingly, the RDF information may include a tabular, array, matrix, or other suitable format. After completing act 205, the process may continue to act 207.

**Table 3**

| **RDF information related to user John Smith** |
|---|
| 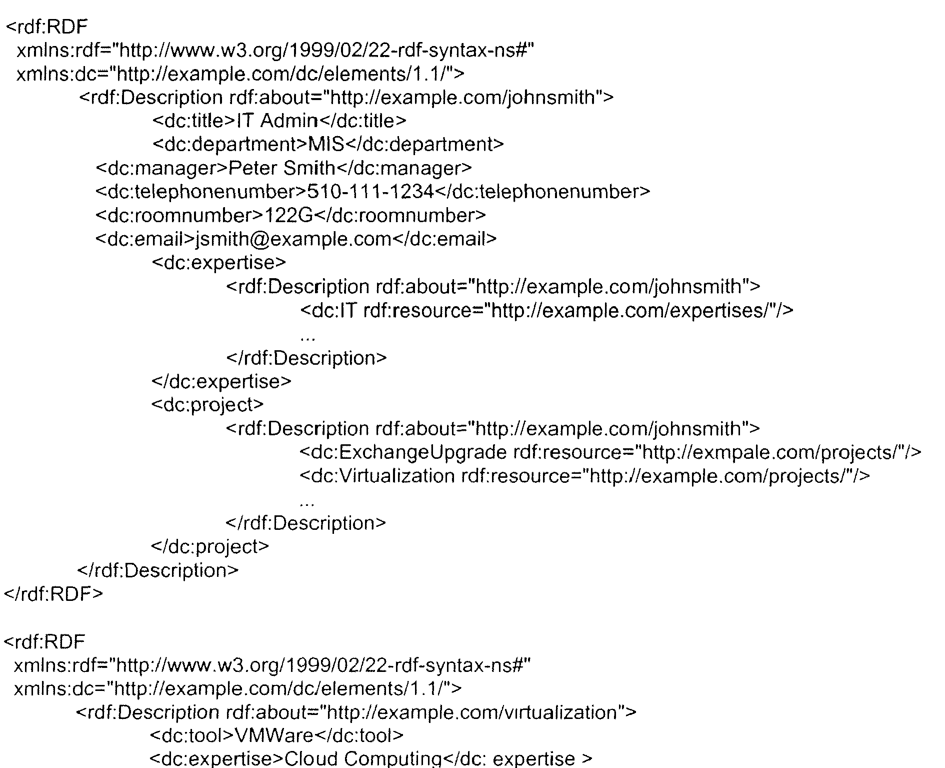 |
| 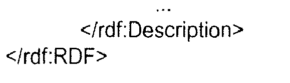 |

During act 207, the process may store the RDF information in a suitable memory such as, for example, a contact index memory (e.g., see, 109) for later use. After completing act 207, the process may continue to act 209, where the process may end.

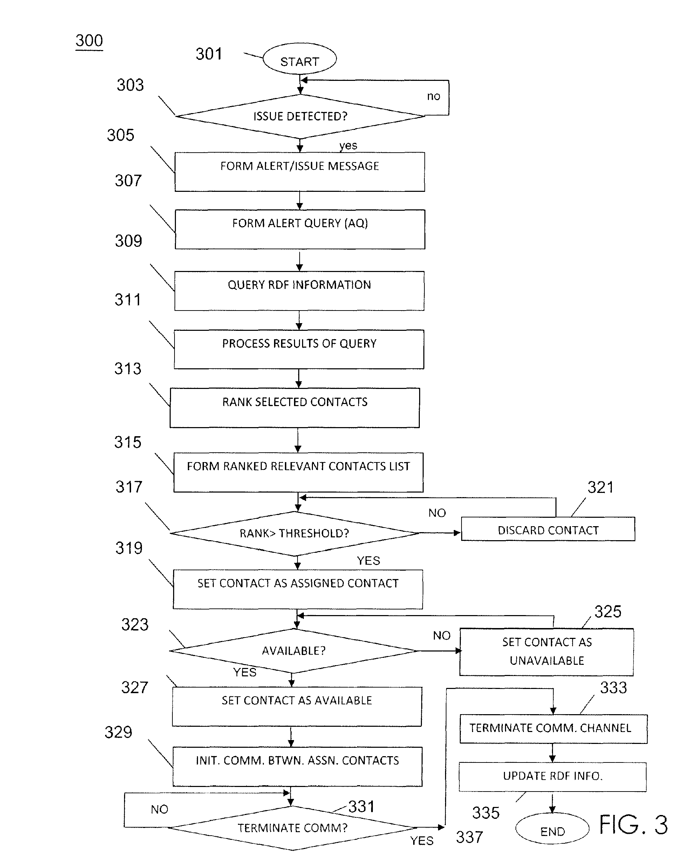

FIG. 3 shows a flow diagram that illustrates a process 300 in accordance with embodiments of the present system. The process 300 may be performed using one or more computers communicating over a network. The process 300 may include one of more of the following acts. Further, one or more of these acts may be combined and/or separated into sub-acts, if desired. In operation, the process may start during act 301 and then proceed to act 303.

During act 303, the process may determine whether an issue has been detected in the system. Accordingly, if it is determined that issue has been detected in the system, the process may continue to act 305. Conversely, if it is determined that an issue has not been detected in the system, the process may repeat act 303.

During act 305, the process may form an alert/issue message in a suitable format which may correspond with the detected issue. Accordingly, for example, the process may form an unstructured text string including one or more of an issue and entity information which corresponds the issue. The alert/issue message may include an unstructured text string such as: "Exchange system failed to contact an active directory (0x8007052b)." Similarly, the entity information may include an unstructured text string such as: "Microsoft Exchange Server", "Active Directory". These unstructured text strings may be configured so as to form a message such as: "Exchange system failed to contact an active directory (0x8007052b)", "Microsoft Exchange Server", "Active Directory". After forming the alert/issue message, the process may continue to act 307.

During act 307, the process may form an alert query (AQ) by processing the alert/issue message so as to translate the alert/issue message into a corresponding alert query (AQ) having a suitable format such as, for example, SPARQL. The AQ may be used by a retrieval process to obtain desired data. To form the AQ, the process may parse the unstructured text string of the alert/issue message into a semantic text analytic using, for example, one or more entity extraction tools (e.g., either internal or external to the system) so as to extract "entities" in accordance with embodiments of the present system. In accordance with these embodiments, entities are nouns, objects, topics or categories such as the names, persons, organizations, locations, expressions of times, quantities, monetary values, percentages, etc. that may be extracted from the text string of the alert/issue message. In accordance with embodiments of the present system, entities may be defined within the scope of a single enterprise (e.g. a unique department unit that only exists in one company) or may be defined and known publicly (e.g., U.S. President Obama).

The one or more entity extraction tools may include one or more applications or tools which may retrieve and/or extract the "entities" from the text string of the alert/issue message. Then the process may determine whether the "entities" may be found in the RDF information, and if so, the process may refine the "entities by translating them so as to form the AQ as illustrated below in Tables 4 and 5 using a suitable format such as, for example, a SPARQL format (although other formats are also envisioned). However, if it is determined that the "entities" could not be found in the RDF information, the process may repeat the parsing procedure using one or more different "entities" which may be found in the RDF information. To determine whether the "entities" are found in the RDF information, the process may search the RDF information. Further, each of the "entities" may correspond with Ontology/Taxonomy protocols of the RDF information. Accordingly, the AQ may be based upon the context of the issue and/or other factors. For example, the same entity may be called differently by different institutions or in different contexts. When entity extraction tool (e.g., entity extraction engine) parses an entity, it may not be able to identify the entity immediately because the entity may be called differently within the different portions of the system. In accordance with embodiments of the present system, the entity extraction engine may search deeper to find all the "SameAs" relationships. For example, the entity extraction engine may discover an entity through all the "derived relationships" enabled by semantic technology such as RDF and OWL ontology language.

The process may also include one or more default "entities" which may be used when the above stated procedure to find "entities" is determined to have been performed a number of times which is equal to or greater than a threshold value (e.g., 5, etc.). Accordingly, the process may use the default "entities" to form a corresponding AQ when a number of attempts to find "entities" has exceeded a threshold value.

**Table 4**

| **SPARQL QUERY** |
|---|
| 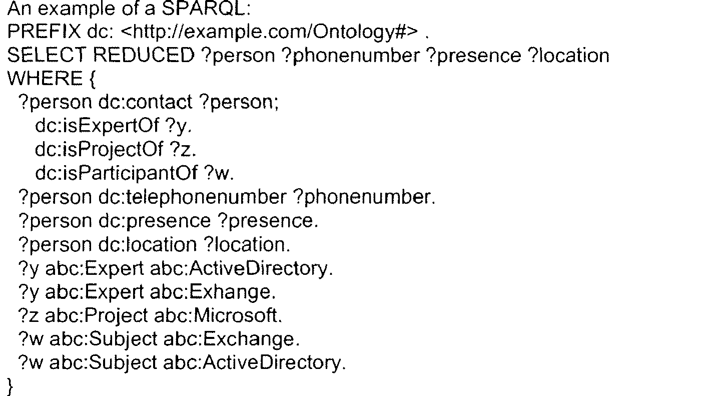 |

**Table 5**

| **SPARQL QUERY** |
|---|
| 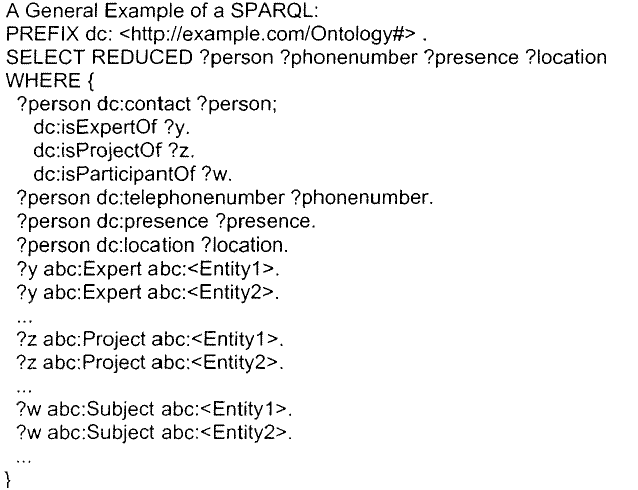 |

After completing act 307, the process may continue to act 309. During act 309, the process may query RDF information in one or more databases such as, for example, a contact index memory (e.g., see, 109) in accordance with the AQ 122 and obtain a corresponding query result set. Thus, the process (e.g., via a semantic engine) may parse the semantic RDF information to obtain the corresponding query result set. The query result set may include results for each issue and/or contact. Thus, the query result set may be in a form of a matrix. After completing act 309, the process may continue to act 311.

During act 311, the query result set may be processed and an associated ranking score may be computed for one or more of the selected contacts. More specifically, the process may search the query result set for sets of triples that match the triple patterns (e.g., AQ 122) and bind the sets of triples to corresponding parts of the query (e.g., AQ 122). More specifically, the process may match and thereafter bind triple patterns in the query result set with corresponding variables in the query (e.g., AQ 122) this information may be known as relevant contact list (RCS) information. After completing act 311, the process may continue to act 313.

During act 313, the process may compute a relevance score for each selected contact which is indicative of a relevance of each contact to the context of the issue. The process may employ any suitable method to determine the relevance score for each selected contact and/or associated issue. For example, the process may use an RDF technique in which each selected contact and/or issue may have one or more RDF triples in the corresponding query result set. Accordingly, the process may determine a number of RDF triples in the query result set for each corresponding selected contact (e.g., based upon the subject) and/or issue. In accordance with embodiments of the present system, a subject may be the alert query itself and/or may include subsequent meaning derived from the AQ and/or the entities extracted from the AQ. For example, the AQ from a finance/accounting department alert email may contain subjects like "accounting", "project", "invoice", "account payable" etc. In accordance with embodiments of the present system, each of these RDF triples may have a positive or negative effect on the associated relevance score based upon whether it (i.e., the RDF triple) has a positive or negative value. Thus, for example, assuming selected contact John Smith is determined to have five (5) positive RDF triples and one (1) negative RDF triple, the process may add these RDF triples to calculate an RDF triple score of four (4) and set John Smith's relevance score to this value (i.e., four (4) (i.e., 5-1=4)). In a similar manner, assuming that selected contact Mary Doe has two (2) positive RDF triples and one (1) negative RDF triple, the process may add these RDF triples to calculate an RDF triple score of (1) and use this value to set Mary Doe's relevance score to this value (i.e., one (1); 2-1=1)). Then, the process may determine a rank for a corresponding selected contact in accordance with the corresponding contact's relevance score. In the present example, it will be assumed that a selected contact's rank score may be set such that it is the same as a contacts relevance score. Further, a relevance score and thus, rank score of each subject may also be determined in a similar manner, if desired.

Although an absolute ranking score method is shown above, it is also envisioned that other methods of setting a selected contact's rank may also be used in accordance with embodiments of the present system. For example, a selected contact's rank may be normalized to indicate a corresponding contact's relative rank relative to other selected contacts and/or a context of an issue. Accordingly, for example, with respect to selected contacts, the ranking score of a selected contact may be normalized such that it is in accordance with the ranking score of other selected contacts. Accordingly, a selected contact with a highest RDF triple score may be assigned an integer value of, for example, 1 while a lowest ranking selected contact of M contacts may have a normalize ranking score of M.

Further, with respect to RDF triples, each of the RDF triples may include a corresponding weight which may indicate an importance (e.g., an integer value where: 10 = most important and 0 = least important or vice versa) which may be set by the user and/or the system. Accordingly, the process may multiply an RDF triple by its corresponding weight to determine a corrected RDF triple value. Then, the process may add the corrected RDF triple values for a selected user to determine the corresponding contacts RDF triple score (i.e., relevance score). Thus, if a weight of an RDF triple value is 5 and its value is 3, then its corrected RDF triple value may be (5)*(3)=15. After all the weighted triple scores are calculated, the process may add these triple scores to determined a relevance score and/or rank score.

After completing act 313, the process may continue to act 315. During act 315, the process may form a ranked relevant contact (RRCL) information by associating selected contacts list (RCS) information with corresponding rank score information for each (or desired) of the selected contacts. The RRCL may form a matrix or other type of list or lists. For example, the RRCL may include a plurality of sub-lists or matrices each of which may correspond with a different selected contact of the plurality of contacts. Thus, the RRCL information may include information related to one or more a selected contacts of the plurality of contacts and a rank score for each corresponding selected contact. After completing act 315, the process may continue to act 317.

During acts 317 through 321, the process may determine whether to set each of the selected contacts as an assigned contact. Accordingly, with reference to act 317, the process may determine (e.g., using the RRCL information) whether a selected contact's rank score is greater than or equal to a threshold value (e.g., 3). Accordingly, if it is determined that a selected contacts rank score is greater than or equal to the threshold value, the process may continue to act 319 where the corresponding contact may be set as an assigned contact using any suitable method. For example, the process may set an assignment flag to 1 to indicate that a corresponding contact is an assigned contact. However, if it is determined that that a selected contacts rank score less than the threshold value, the process may continue to act 321 where the corresponding contact may be marked an unassigned contact using any suitable method. For example, the process may set the assignment flag to 0 to indicate that a corresponding contact is an unassigned contact. However, it is also envisioned that the unassigned contacts may be discarded (i.e., removed from the RRCL, etc.). The process may repeat steps 317 through 321 for each selected contact and thereafter continue to act 323.

During act 323, the process may determine whether one or more of the assigned contacts is available using any suitable method such as, for example, presence and/or location determination methods For example, when the process determines one or more contacts related to the issue/alert, the process may look up from some other enterprise systems for their presence and location. In accordance with embodiments of the present system, presence is an indication of the availability and current status of people on a network. Enterprise Unified Communications and Messaging servers, such as Microsoft OCS, IBM Lotus Sametime, Jabber, etc., contain real time presence information that may be utilized. In these systems, location information may be retrieved from network connectivity information. For example, the process may look up the IP addresses of contacts connected devices, receive GPS information, cell ID triangulation, etc., to determine the locations. Accordingly, the process may determine availability of one or more selected contacts (e.g., John Smith) and may produce RDF information of a contact as shown below in Table 4. For example, for the communication system shown in Fig 1, the retrieval portion 104 may produce a list of relevant contacts based upon the AQ of an issue or event. The list of contacts may be processed by the contact selection portion 112, such that for each contact on the list, the process may perform multiple iterations to lookup the availability (Presence and/or Location) using the presence and location portion 113.

In accordance with embodiments of the present system, the presence and location portion 113 may take each contact as an input parameter and invoke other enterprise Presence and Location systems. The presence and location portion 113 output results may be provided in an RDF format as shown in Table 4 below. The presence and location portion 113 may continuously check from the enterprise Presence and Location systems and update the contact RDF if a contact becomes "available" or "not available" or changes "location". This process may be repeated for each assigned contact or may performed once using contact availability query which is formed in accordance with a plurality (e.g., all) of the assigned contacts. Act 323 may be performed once for all assigned contacts or may be performed for each assigned contact individually. It is further envisioned that the process may continually check whether an unavailable contact has become an available contact (e.g., contact just walked into work, etc.) and update corresponding information accordingly.

**Table 4**

| **CONTACT AVAILABILITY QUERY** |
|---|
| 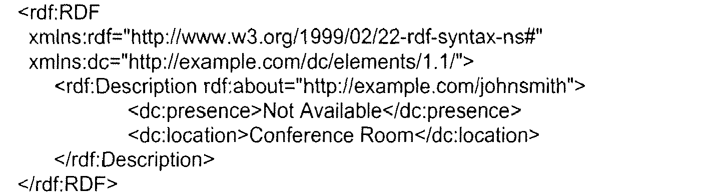 |

After running the contact availability query, the process may obtain results of the contact availability query and determine whether each assigned contact (of the plurality of selected contacts) is available. Accordingly, if the process determines that a corresponding assigned contact is available, the process may continue to act 327. However, if the process determines that a corresponding assigned contact is not available, the process may continue to act 325.

During act 325, the process may set a corresponding contact as an unavailable contact using any suitable method. For example, the process may set an availability flag to a value (e.g., 0) to indicate that the contact is unavailable. However, it is also envisioned that the process may set a contact as unavailable by removing the contact's information from the RCCL information, etc. After completing act 325, the process may repeat act 329.

During act 327, the process may mark a corresponding assigned contact as an available contact using any suitable method. For example, the process may set an availability flag to a value (e.g., 1) which may indicate that the contact is available or may add information associated with a contact (e.g., identification, contact address (e.g., telephone number), etc.) to an assigned contact list to be used by, for example, a NAPI. After completing act 327, the process may continue to act 329.

During act 329, the process may initiate a communication channel with one or more of the assigned contacts. Accordingly, the process may attempt (e.g., via a NAPI) to contact each of the assigned contacts (e.g., using contact information such as, for example, telephone number, SMS, email, etc.) on a US (e.g., 134-x) and ascertain whether a contact desires to participate in the communication channel and establish a communication channel including one or more assigned contacts who wish to participate in the channel. Accordingly, the process may obtain the contact information from, for example, a previous query (e.g., see the SPARQL queries of Tables, 1 and 2), a memory of the system such as, for example, an AD/SDAP, RDF information, etc. Accordingly, the process may render a user interface on a users device which may inform a corresponding assigned contact of a corresponding issue and/or may inquire whether the corresponding assigned contact desires to participate in a communication channel. Then, the process may await corresponding response. Accordingly, if it is determined a corresponding assigned contact wishes to participate (and become a participant) in a corresponding communication channel, the process may arrange for the communication. The communication may be established using any suitable conference communication method to transmit audio, visual, audiovisual, and/or data information between the participating contacts using related devices of the participating contacts. Accordingly, the process may call existing third party applications such as, for example, Internet Messenger™ (IM), Google™ Wave™, etc., to establish the communication channel. As applications which can establish communication channels and, thus, establish communication between users are known in the art, a further description thereof will not be given.

After completing act 329, the process may continue to act 331. Further, although a single communication channel is discussed, in accordance with embodiments of the present system, a plurality of communication channels may be established. Moreover, it is also envisioned that a communication channel may be established for respective issues of a plurality of issues. It is further envisioned that the process may contact the user on user device such as, for example, US 134-x. The process may determine one or more devices (e.g., US 134-x) with which to contact a user on based upon information such as, for example, availability information, AD/LDAP information, etc. After completing act 329, the process may continue to act 331.

During act 331, the process may determine whether to terminate one or more of the communication channels. Accordingly, the process may monitor the one or more communication channels to determine whether to terminate communication between participating contacts on a corresponding communication channel. Accordingly, if the process determines to terminate a corresponding communication channel, the process may continue to act 333. Conversely, if the process determines not to terminate a corresponding communication channel, the process may repeat act 331.

The process may determine whether to terminate communication between participating contact on a corresponding communication channel by monitoring participants in a corresponding communication channel and determining whether one or more participants have decided to terminate participation in the communication channel. Accordingly, if it is determined that one or more participating contacts has decided to terminate a corresponding communication channel, the process may terminate the communication channel. Further, it is also envisioned that the process may terminate a corresponding communication channel automatically, when terminating conditions are determined to exist. For example, a terminating condition may be determined to exist when, for example, if it is determined that the number of participating contacts in a corresponding communication channel is determined to be less than or equal to a threshold value (e.g., 2 although other values are also envisioned). Accordingly, when the process determines that this terminating condition is found to exist, the process may terminate the corresponding communication channel and notify the contacts of the termination. Further, another terminating condition may be found to exist when, for example, the process determines that a current issue has been resolved. Thus, the process may monitor issues, determine whether they are resolved (e.g., either automatically or from a participating contact), and/or notify the participating contacts in the communication channel of such in real-time.

During act 333, the process may update the RDF information (e.g., in the RDF store) using information generated by the process such as, for example, whether a selected contact was/is assigned contact, a contacts relevance score, whether an assigned contact elected to participate in a channel, whether a participating assigned contact provided any information that was used to solve the issue (e.g., contributed a software patch, ran an application, etc.), moderated a communication channel, whether an issue was resolved, etc. Tables 5 and 6 illustrates an update process which may be performed by the present system to update RDF information based upon whether an assigned contact has participated in a communication channel. Thus, the process may generate feedback information which may be used to update system information such as, for example, the RDF information.

Accordingly, for example, if it is determined that an assigned contact (e.g., John Smith) has participated in a communication channel, the process may run an RDF script as shown in Table 5 below.

**Table 5**

| **Participation Feedback Script** |
|---|
| 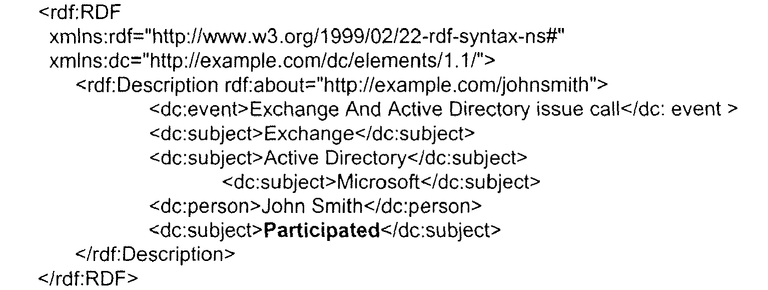 |

Conversely, if it is determined that an assigned contact (e.g., John Smith) has not participated in a communication channel, the process may run a process (e.g., shown as an RDF script) as shown in Table 6 below

**Table 6**

| **Non-Participation Feedback Script** |
|---|
| 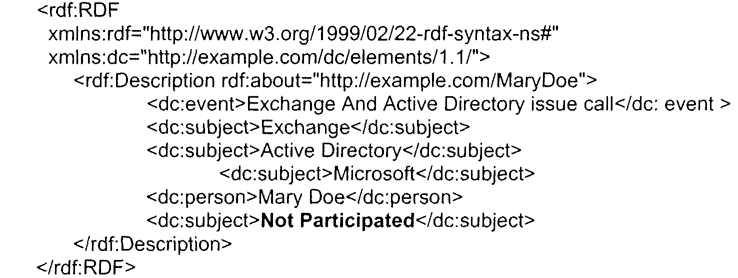 |

Accordingly, the RDF information may be updated in accordance with use of the system. Accordingly, when an assigned contact does not elect to participate in a channel as a participant, this may have a negative effect on the contact's statistics and, thus, affect the user's future relevance score. Accordingly, the RDF information may be updated by the system to indicate such. Similarly, if an assigned contact elects to participate in a channel as a participant and becomes a participating contact, this may have a positive effect on the user's statistics and may, thus, affect a contact's future RDF information and thus, a contact's future RDF score. Thus, the present system may continually update the RDF information (e.g., in the RDF store) in accordance with use information including contact information. After completing act 319, the process may continue to act 335 where it ends.

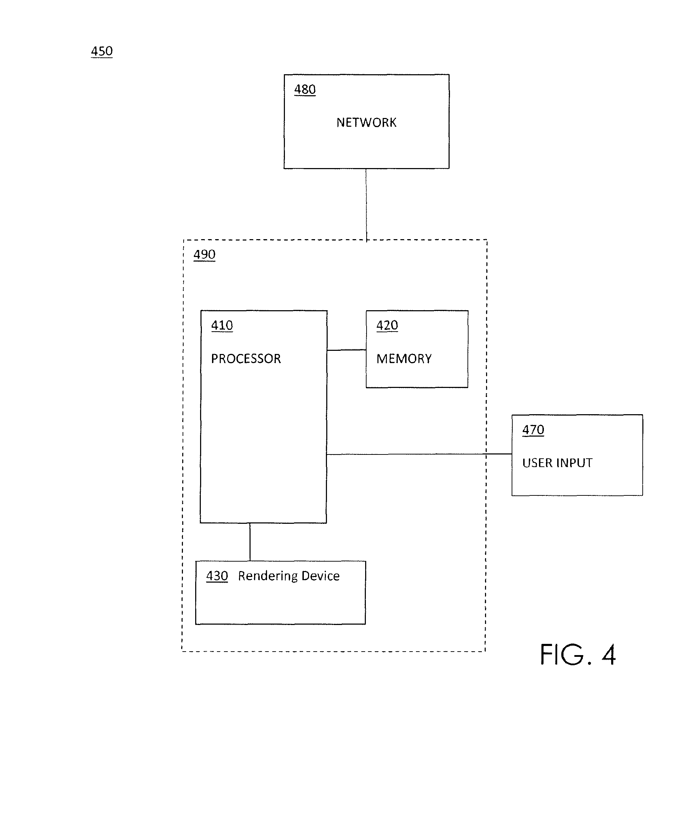

FIG. 4 shows a portion of a system 400 (e.g., peer, server, user station, etc.) in accordance with embodiments of the present system. For example, a portion of the present system may include a processor 410 operationally coupled to a memory 420, a display 430 and a user input device 470. The memory 420 may be any type of device for storing application data as well as other data related to the described operation. The application data and other data are received by the processor 410 for configuring (e.g., programming) the processor 410 to perform operation acts in accordance with the present system. The processor 410 so configured becomes a special purpose machine particularly suited for performing in accordance with the present system.

The operation acts may include requesting, providing, and/or rendering of a user interface (UI) in accordance with embodiments of the present system. The user input 470 may include a keyboard, mouse, trackball or other device, including touch sensitive displays, which may be stand alone or be a part of a system, such as part of a personal computer, personal digital assistant, mobile phone, set top box, television or other device for communicating with the processor 410 via any operable link. The user input device 470 may be operable for interacting with the processor 410 including enabling interaction within a UI as described herein. Clearly the processor 410, the memory 420, display 430 and/or user input device 470 may all or partly be a portion of a computer system or other device such as a client and/or server as described herein.

The methods of the present system are particularly suited to be carried out by a computer software program, such program containing modules corresponding to one or more of the individual steps or acts described and/or envisioned by the present system. Such program may of course be embodied in a computer-readable medium, such as an integrated chip, a peripheral device or memory, such as the memory 420 or other memory coupled to the processor 410.

The program and/or program portions contained in the memory 420 configure the processor 410 to implement the methods, operational acts, and functions disclosed herein. The processor 410 so configured becomes a special purpose machine particularly suited for performing in accordance with the present system. The memories may be distributed, for example between the clients and/or servers, or local, and the processor 410, where additional processors may be provided, may also be distributed or may be singular. The memories may be implemented as electrical, magnetic or optical memory, or any combination of these or other types of storage devices. Moreover, the term "memory" should be construed broadly enough to encompass any information able to be read from or written to an address in an addressable space accessible by the processor 410. With this definition, information accessible through a network is still within the memory, for instance, because the processor 410 may retrieve the information from the network for operation in accordance with the present system.

The processor 410 is operable for providing control signals and/or performing operations in response to input signals from the user input device 470 as well as in response to other devices of a network and executing instructions stored in the memory 420. The processor 410 may be an application-specific or general-use integrated circuit(s). Further, the processor 410 may be a dedicated processor for performing in accordance with the present system or may be a general-purpose processor wherein only one of many functions operates for performing in accordance with the present system. The processor 410 may operate utilizing a program portion, multiple program segments, or may be a hardware device utilizing a dedicated or multi-purpose integrated circuit.

Accordingly, the present system may operate as a semantic enterprise conferencing solution which may understand and analyze an "issue" triggered within an enterprise. The system may then semantically determine relevance of users to the issue and thereafter select a group of users who are who are most relevant to the issue and contact these users to establish a communication between these users and the system. Accordingly, the system may establish conference communication between the selected group of individuals.

Further variations of the present system would readily occur to a person of ordinary skill in the art and are encompassed by the following claims. Through operation of the present system, a virtual environment solicitation is provided to a user to enable simple immersion into a virtual environment and its objects.

Finally, the above-discussion is intended to be merely illustrative of the present system and should not be construed as limiting the appended claims to any particular embodiment or group of embodiments. Thus, while the present system has been described with reference to exemplary embodiments, it should also be appreciated that numerous modifications and alternative embodiments may be devised by those having ordinary skill in the art without departing from the broader and intended spirit and scope of the present system as set forth in the claims that follow. In addition, the section headings included herein are intended to facilitate a review but are not intended to limit the scope of the present system. Accordingly, the specification and drawings are to be regarded in an illustrative manner and are not intended to limit the scope of the appended claims.

In interpreting the appended claims, it should be understood that:
a) the word "comprising" does not exclude the presence of other elements or acts than those listed in a given claim;
b) the word "a" or "an" preceding an element does not exclude the presence of a plurality of such elements;
c) any reference signs in the claims do not limit their scope;
d) several "means" may be represented by the same item or hardware or software implemented structure or function;
e) any of the disclosed elements may be comprised of hardware portions (e.g., including discrete and integrated electronic circuitry), software portions (e.g., computer programming), and any combination thereof;
f) hardware portions may be comprised of one or both of analog and digital portions;
g) any of the disclosed devices or portions thereof may be combined together or separated into further portions unless specifically stated otherwise;
h) no specific sequence of acts or steps is intended to be required unless specifically indicated; and
i) the term "plurality of" an element includes two or more of the claimed element, and does not imply any particular range of number of elements; that is, a plurality of elements may be as few as two elements, and may include an immeasurable number of elements.

## Claims

1. A communication method to communicate with one or more users of a plurality of users in an enterprise system, the communication method controlled by one or more controllers and comprising acts of:
determining whether an issue has occurred in the enterprise system;
determining a context of the issue;
determining a ranking of each of the one or more users based upon a relationship of each of the one or more users to the context of the issue;
selecting one or more users from the plurality of users in accordance with the ranking score of each user; and
establishing communication via a communication channel with one or more of the selected users.

2. The method of claim 1, further comprising an act of indexing information in the enterprise system in accordance with a semantic protocol.

3. The method of one of the previous claims, further comprising an act of forming a query in accordance with the context of the issue.

4. The method of claim 3, further comprising an act of querying indexed information in accordance with the query so as to obtain a corresponding query result set.

5. The method of one of the previous claims, wherein the selection step further comprises determining whether the ranking score of a corresponding user of the plurality of users is greater than or equal to a threshold value.

6. The method of one of the previous claims, further comprising an act of determining whether one or more of the selected users of the plurality of users is available based upon one or more of presence and location information.

7. A communication system to communicate with one or more users of a plurality of users in an enterprise system, the communication system comprising:
one or more controllers which:
determine whether an issue has occurred in the enterprise system;
determine a context of the issue;
determine a ranking score of each of the one or more users based upon a relation of each of the one or more users to the context of the issue;
select one or more users from the plurality of users in accordance with the ranking score of each user of the plurality of users; and
establish communication via a communication channel with one or more of the selected users of the plurality of users.

8. The system of claim 7, wherein the controller indexes information in the enterprise system in accordance with a semantic protocol.

9. The system of one of the previous claims 7 and 8, wherein the controller forms a query in accordance with the context of the issue.

10. The system of claim 9, wherein the controller queries indexed information in accordance with the query so as to obtain a corresponding query result set.

11. The system of one of the previous claims 7 to 10, wherein the controller performs the selection in accordance with a determination of whether the ranking score of a corresponding user of the plurality of users is greater than or equal to the threshold value.

12. The system of one of the previous claims 7 to 11, wherein the controller determines whether one or more of the selected users of the plurality of users is available based upon one or more of presence and location information.

13. A computer program stored on a persistent computer readable memory medium, the computer program configured to carry out a communication method to communicate with one or more users of a plurality of users in an enterprise system according to claims 1 to 6.
